# EUROPEAN PATENT APPLICATION

(11) **EP 2 623 642 A1**
(43) Date of publication of application: **07.08.2013**
(21) Application number: 11828646.7
(22) Date of filing: 18.08.2011
(51) Int. Cl.: C25B 9/00, C25B 1/10, C25B 5/00, C25B 11/04, C25B 11/10, C25B 11/16

(54) **HYDROGEN PRODUCTION SYSTEM**

(30) Priority: 30.09.2010 JP 2010220253
(71) Applicant: Hitachi, Ltd., Chiyoda-ku Tokyo 100-8280 (JP)
(72) Inventor: SUGIMASA Masatoshi, Tokyo 100-8220 (JP)
(74) Representative: Beetz & Partner
(86) International application number: PCT/JP2011/068653
(87) International publication number: WO 2012/043085

(57) **Abstract**

The present invention provides a hydrogen production apparatus including an electrode pair including a hydrogen electrode and an oxygen electrode, a partition wall interposed between the hydrogen electrode and the oxygen electrode, and a tank containing the electrode pair, the partition wall, and an aqueous electrolyte solution, the hydrogen production apparatus generating hydrogen by electrolysis of the aqueous electrolyte solution by the electrode pair, in which the oxygen electrode includes an oxide or a hydroxide of a metal, and the specific surface area of the oxygen electrode is larger than that of the hydrogen electrode. According to this configuration, hydrogen is generated by a reduction reaction of water at the hydrogen electrode, and a charge/discharge reaction proceeds at the oxygen electrode. Thus, deterioration of the electrode caused by oxidation-reduction can be suppressed and the response to the fluctuation of an inputted power by the renewable energy, and reliability can be improved since a potential at the oxygen electrode can be kept at a predetermined level or higher in the hydrogen production apparatus.

## Description

### Technical Field

The present invention relates to a hydrogen production system for producing hydrogen by electrolysis of water.

### Background Art

Since power generation stations utilizing renewable energy such as wind power or sun light emit very little carbon dioxide, they have been introduced over the world with a view point of suppressing global warming.

However, the power derived from the renewable energy fluctuates greatly and requires leveling in order to introduce a great amount of the power to system lines. While a leveling method of once charging the power in a battery has been proposed, the battery involves problems, for example, that the cost per capacitance is high and the power storage capacitance is limited. Further, since the levelingmethodbythebattery is based on the premise of supplying energy by way of system lines, additional provision of the system lines is necessary in remote places where the renewable energy is obtainable in abundance. Further, distance to power consuming areas is long and there may be a difficulty in maintaining the balance between supply and demand of power.

In view of the above, as a method of storing the power generated by the renewable energy, a method of storing the power by conversion into chemical energy of a material such as hydrogen has beenproposed. Conversion of the electric energy into the chemical energy of a material enables long-time storage or long-range transportation and can promote utilization of the renewable energy abound in the remote places. Particularly, hydrogen has an advantage of not emitting carbon dioxide during use and easy production by electrolysis of water.

While existent electrolysis apparatuses have been utilized generally at a constant output of system power, water electrolysis apparatuses that utilize the renewable energy have also been studied.

For example, patent literature 1 discloses a power generation system including a battery for accumulating power of wind power generation or solar power generation, a water electrolysis tank that electrolyzes water by using power and a fuel cell, and also having heating means for heating the water electrolysis tank and the fuel cell.

### Citation List

### Patent Literature

Patent literature 1: Japanese Unexamined Patent Application Publication 2006-236741

### Summary of Invention

### Problems to be resolved by the Invention

Water is electrolyzed by applying a voltage between two electrodes immersed in an aqueous solution. Accordingly, improvement in the performance, increase in the working life and reduction in the cost of the electrode are indispensable for the development of the water electrolysis apparatus. For existent electrodes, it has been considered to use them at a constant voltage and if they are used on fluctuating power, they involve the subject in the response and the working life.

For the response, existent water electrolysis apparatuses require several hours for power fluctuation and cannot cope with the input of power generated by the renewable energy that fluctuates on the order of several seconds to several minutes. In such circumstance, there are problems such as a back flow of power which damages control equipment or application of excess power to a portion of the electrodes which deteriorates them. Further, for the working life, when fluctuating power is inputted, the electrode potential rises and lowers repetitively to result in a problem of worsening the electrode performance over time due to cracking by the voluminal change of the electrode accompanying the redox reaction or leaching by dissolution. Accordingly, water electrolysis apparatuses suitable to the use of the fluctuating power are demanded for power generation stations of renewable energy.

The present invention intends toprovide ahydrogenproduction apparatus having excellent response to the fluctuation of the input power by the renewable energy and having high reliability.

### Means of Solving the Problems

The present invention provides a hydrogen production apparatus of generating hydrogen by electrolysis of water by means of electrodes as apair of a hydrogen electrode and an oxygen electrode, in which the charge/discharge capacitance of an oxygen electrode is 10 to 10,000 times as large as that of the hydrogen electrode.

### Advantageous Effect of the Invention

The present invention can provide a hydrogen production apparatus having excellent response to fluctuation of input power by renewable energy and having high reliability.

### Brief Description of Drawings

Fig. 1 is a schematic view illustrating a cell of a hydrogen production apparatus according to an example.
Fig. 2A is a schematic view illustrating a hydrogen production apparatus in which cells are connected in parallel.
Fig. 2B is a schematic view illustrating a hydrogen production apparatus in which cells are connected in parallel.
Fig. 3 is a schematic view illustrating a hydrogen production apparatus of another example.

### Description of Embodiments

The configuration and the characteristics of the apparatus are to be described in details.

The hydrogen production apparatus by electrolysis of water according to the present invention is an apparatus for producing hydrogen by the electrolysis of water by electric power. The hydrogen production apparatus by the electrolysis of water includes a hydrogen electrode, an oxygen electrode, a partition wall preventing a short circuit between the electrodes, and a tank containing them as essential constituent elements. Theconstituent elements are referred as a cell. Water is electrolyzed by introducing an aqueous electrolyte solution into the cell and inputting the electric power. The hydrogen electrode and the oxygen electrode are disposed being opposed to each other.

In the hydrogen production apparatus by electrolysis of water according to the present invention, energy storage by conversion of power generated by the renewable energy into hydrogen and storing the same is a main purpose, and oxygen generated at the oxygen electrode is not essential.

Then, the present inventors have achieved the present invention based on the technical idea of preferentially performing charge/discharge reaction at the oxygen electrode, which is utilized for attaining high speed response and preventing an electrode deterioration by keeping an oxygen electrode potential constant.

The charge/discharge reaction means a reaction including a phenomenon of forming an electric double layer and a reaction in which a metal oxide is transformed to a metal hydroxide.

A major aspect of the hydrogen production apparatus by electrolysis of water of the present invention resides in that the charge/discharge capacitance of the oxygen electrode is 10 to 10,000 times as large as that of the hydrogen electrode. In the hydrogen production apparatus by electrolysis of water according to the present invention, generation of hydrogen due to reduction reaction of water proceeds at the hydrogen electrode and charge/discharge reaction proceeds at the oxygen electrode since the charge/discharge capacitance of the oxygen electrode reaches 10 to 10,000 times as larger as that of the hydrogen electrode.

The charge/discharge capacitance means capacitance including double layer capacitance by formation of the electric double layer and pseudo capacitance due to change of valence number, such as the transformation of the metal oxide to the metal hydroxide.

In the existent water electrolysis apparatus, bubbles of hydrogen and oxygen are evolved at respective electrodes along with progress of reaction. When the bubbles are deposited to the surface of the electrodes, they result in reaction resistance since the area of contact surface between the electrode surface and the electrolyte is decreased. Particularly, current concentrates locally to a portion in contact with the electrolyte to increase voltage at the oxygen electrode which is put in an intense corrosive circumstance compared with the hydrogen electrode when the electrode surface area is decreased by the deposition of the bubbles. Correspondingly, a reaction of dissolving the electrode proceeds concurrently to cause deterioration of the electrode. Further, the input voltage fluctuates, voltage increases and decreases violently and the water electrolysis reaction proceeds and stops frequently since the water electrolysis reaction proceeds at a voltage at a certain level or higher. If the voltage increases violently from the state where the water electrolysis reaction is stopped, a surface structure of the electrode is fractured by the dissolution of the electrode due to concentration of the voltage and by a pressure of the bubbles accompanying rapid evolution of the bubbles. Since the surface of the oxygen electrode includes a brittle metal oxide, the electrode is more liable to be fractured compared with the hydrogen electrode.

At an interface between the metal oxide and the electrolyte, capacitance referred to as pseudo capacitance is present due to the change of the valence number, such as the transformation of the oxide to the hydroxide of the metal in addition to the double layer capacitance where the charges are stored. Since the double layer capacitance is formed by the movement of ions and charges at the interface and the pseudo capacitance is formed by the change of the valence number of metal atoms and solid reaction of oxide/hydroxide, bubbles are not evolved. Accordingly, the electrode is unlikely to be deteriorated by decrease of the electrode surface area and dissolution and fracture of the electrode described above. Particularly, since the double layer capacitance is formed by the movement of the charges or the ions, the reaction time is short compared with the water electrolysis reaction and can cope with abrupt fluctuation of the input power. Further, since the charge/discharge reaction proceeds at a voltage lower than that of the water electrolysis reaction and can cope with a wide region of the voltage, this serves to moderate abrupt fluctuation of the voltage.

As described above, it can be considered that a reaction is preferentially performed at the oxygen electrode based on the charge/discharge reaction by utilizing the double layer capacitance and the pseudo capacitance with a viewpoint of improving the response, suppressing the degradation of the electrode, and reducing the reaction resistance in a situation where there is less demand for oxygen.

The hydrogen production apparatus of the present invention that utilizes the electrolysis of water can cope with the input of power generated by the renewable energy that fluctuates on the order of several seconds to several minutes.

In the hydrogen production apparatus, generation of hydrogen proceeds at the hydrogen electrode by water reduction reaction and an oxygen generating reaction proceeds at the oxygen electrode. However, it is preferred that the charge/discharge reaction is mainly taken place rather than the oxygen generation reaction at the oxygen electrode in a situation where the input power fluctuates as described above. When the charge/discharge reaction is mainly taken place, it can cope with the power fluctuation in a short period on the order of several seconds to several minutes since the reaction rate increases more compared with a usual oxygen generation reaction and high response is possible. Further, fracture and dissolution of the electrode can be suppressed since bubbles are not evolved in the charge/discharge reaction. Further, in a case of using a plurality of electrolysis tanks, when an oxygen electrode having high charge/discharge capacitance is introduced to some of them, the potential on other oxygen electrodes can be kept at a predetermined level or higher, so that deterioration of the electrodes accompanying the power fluctuation can be suppressed. Then, a water electrolysis apparatus suitable to the fluctuating power can be provided. In the present invention, the oxygen generation reaction at the oxygen electrode is not prohibited but oxygen may be generated from the oxygen electrode. In the present specification, the oxygen electrode having charge/discharge capacitance from 10 to 10, 000 times as large as that of the hydrogen electrode is referred to as a charge/discharge oxygen electrode.

The charge/discharge oxygen electrode has double layer capacitance and pseudo capacitance.

Since the double layer capacitance is in proportion to the electrode surface area, the capacitance becomes larger as the specific surface area is larger. While refinement of the structure is effective for increasing the specific surface area of the electrode, care should be taken since excess refinement may lower the strength of the electrode.

On the other hand, since the pseudo capacitance is due to the solid reaction of an oxide or hydroxide of a metal, the capacitance is in proportion to the total amount of the oxide or the total amount of the hydroxide at the electrode. Accordingly, while the capacitance can be made larger as the amount of the metal oxide is increased, this involves a subject such as increase in the cost of the electrode. Further, increase in the thickness of the metal oxide at the surface of the electrode involves a subject that the reaction rate is lowered.

When storage of power is intended, it is more preferred that the charge/discharge capacitance is larger. However, when the charge/discharge capacitance is increased, this results in a problem of increasing the cost and reducing the strength as described above. The present invention intends to provide a hydrogen production apparatus for producing hydrogen by fluctuating power of the renewable energy, and it may suffice that the charge/discharge oxygen electrode can correspond to the input of the power generated by the renewable energy that fluctuates on the order of several seconds to several minutes.

Then, the charge/discharge oxygen electrode preferably has charge/discharge capacitance 10 to 10,000 times as large as the hydrogen electrode as the charge/discharge capacitance necessary and sufficient for a rapid response to the power fluctuation for several seconds to several minutes and leveling the fluctuation. The specific surface area of the electrode and the total amount of the metal oxide or hydroxide are not specified but should be selected in consideration of the cost and the necessary capacitance, application use, characteristics of the input power, etc. In a preferred example, a specific surface area is 1 to 10 times as large as the hydrogen electrode and, more preferably, the specific surface area is 2 to 10 times as large as the hydrogen electrode. Further, a total amount of the oxide or hydroxide of the metal preferably has pseudo capacitance of about 10 to 1, 000 times as large as that of the hydrogen electrode.

As the charge/discharge oxygen electrode, an electrode including the oxide or hydroxide of the metal having a large specific surface area is preferred. The specific surface area of the electrode and the total amount of the oxide or hydroxide of the metal are not specified but should be selected in consideration of the cost and the required capacitance, application, and the characteristics of the input power. In a preferred example, the specific surface area is 10 to 100 times as large as that of the hydrogen electrode and it further has the oxide or hydroxide of the metal having the pseudo capacitance about 10 to 100 times as large as the hydrogen electrode.

The charge/discharge oxygen electrode includes the oxide or hydroxide of the metal, and the metal includes one of metals of Ni, Ru, Ir, Ti, Sn, Mo, Ta, Nb, V, Fe and Mn, or an alloy containing a plurality of the metals. Since the conductivity of the metal oxide or the metal hydroxide is lower compared with the metal, use of Ni, Ru or Ir of higher conductivity is preferred. However, since Ru and Ir as particularly noble metal increase the cost, they are preferably used by a combination of Ni and one of metals of Ti, Sn, Mo, Ta, Nb, V, Fe and Mn.

The shape of the charge/discharge oxygen electrode is not particularly restricted so long as it has a large specific surface area, and a porous member, a net, or a fibrous non-uneven fabric is used preferably. An electrode filled with fine particles can also be used since the specific surface area is increased. However, since the fine particles may possibly increase resistance at the point of contacts, the porous member, the net, or the fibrous non-woven fabric having low resistance as the entire electrode is used preferably. Since the resistance of the entire electrode is low, a high speed response to the fluctuating power is possible.

The hydrogen electrode serves to promote a reduction reaction of water to generate hydrogen. The hydrogen electrode preferably has a large specific surface area and, more preferably, it comprises a porous member, a net, or a non-woven fabric. Further, a nano-structure, etc. may be preferably formed on the surface of the hydrogen electrode. For taking place the hydrogen generating reaction at lower power, a platinum group metal such as Pt, Rh or Ir having a further lower hydrogen overvoltage is used preferably. Since the platinum group metal is expensive, Ni, Fe, etc. which are less expensive may also be used and they may be alloyed with the platinum group metal for use.

The aqueous electrolyte solution used in the hydrogen production apparatus of the present invention is not particularly restricted, but an alkaline aqueous solution is used preferably in order to suppress corrosion of the electrode or the tank. Also, there is no particular restriction on the material of the partition wall, but a highly stable resin insoluble to the aqueous solution is preferred. An example includes polyimide, polyethylene, etc. In a case of using the resin, it should be a porous member or a spongy structure so that ions can move in the inside.

Further, an ionically conductive resin having both properties of the electrolyte and the partition wall may also be used. Particularly, when a proton conductive resin is utilized, there is no requirement for gas-liquid separation and power generation is also facilitated since there is no requirement for the aqueous solution on the side of the oxygen electrode and water on the side of the hydrogen electrode, but only pure hydrogen is present.

The hydrogen production apparatus according to the present invention can be utilized as a single cell but pairs of the hydrogen electrode and the oxygen electrode in plurality connected in parallel may be used. They can be used by forming a bipolar type of plural cells connected in series. Since the electrolysis voltage can be increased in the bipolar type, this can be utilized when high voltage power is inputted. In the parallel type, the operation state in each of the cells can be changed in accordance with the change of the input power. Each of the cells can be operated by operation power at high efficiency by operating all of the cells when the input power is large and by decreasing the number of operated cells when the input power is lowered. Further, in the parallel type, while charge/discharge oxygen electrode can be used for the all of the cells, the charge/discharge oxygen electrode may be used only for some of the cells.

The charge/discharge electrode has an advantage that the deterioration of the electrode due to repetitive oxidation and reduction reactions can be suppressed even when the input power is lowered since the potential of the oxygen electrode per se is unlikely to be lowered by the discharge of the charged electric capacitance. Accordingly, although use of the charge/discharge oxygen electrode for all of the cells is intended in the present invention, the charge/discharge oxygen electrode can be used only for some of the cells when the oxygen gas is necessary or in a case where the input power fluctuates less, or the fluctuation time is short, so that only the fluctuation of the input power may be coped with by the charge/discharge oxygen electrode. In this case, when the input power is lowered, lowering in the voltage of a usual oxygen electrode can be suppressed by connecting a cell having the charge/discharge oxygen electrode and a cell having the usual oxygen electrode in parallel.

The hydrogen production apparatus of the present invention includes a hydrogen storing device for storing evolved hydrogen. Hydrogen containing water evolved at the hydrogen electrode is separated by a gas-liquid separation device into hydrogen and water, and separated hydrogen is stored in the hydrogen storing device. While a hydrogen separation membrane is used preferably as the gas-liquid separation device, gas-liquid separation by cold energy may also be used. Hydrogen separated from water can be transported to consumption areas in high pressure tanks, by way of pipelines, or by conversion into organic hydrides.

The hydrogen production apparatus of the present invention has a hydrogen storing unit and can accumulate and release hydrogen. For the hydrogen storing unit, a gas tank manufactured by SUS steel or a composite material including carbon fiber and aluminum may be used, or a hydrogen occluding alloy may also be used. Further, they may be used in combination.

Further, the hydrogen production apparatus of the present invention includes a mechanism of releasing hydrogen gas from the hydrogen storing unit into a solution in which the hydrogen electrode is immersed. In this case, since a reaction of oxidizing hydrogen to release water, that is, a reaction reverse to the electrolysis of water proceeds at the hydrogen electrode, electric power can be generated by being combined with the discharge reaction at the charge/discharge oxygen electrode. The hydrogen production apparatus of the present invention having the mechanism of releasing hydrogen to the hydrogen electrode and the charge/discharge oxygen electrode can also cope with the situation that requires not only hydrogen but also electric power.

The best mode for practicing the present invention is to be described with reference to specific examples but the present invention is not restricted to the following examples.

### [Example 1]

Example 1 is an example of hydrogen production apparatus of the present invention.

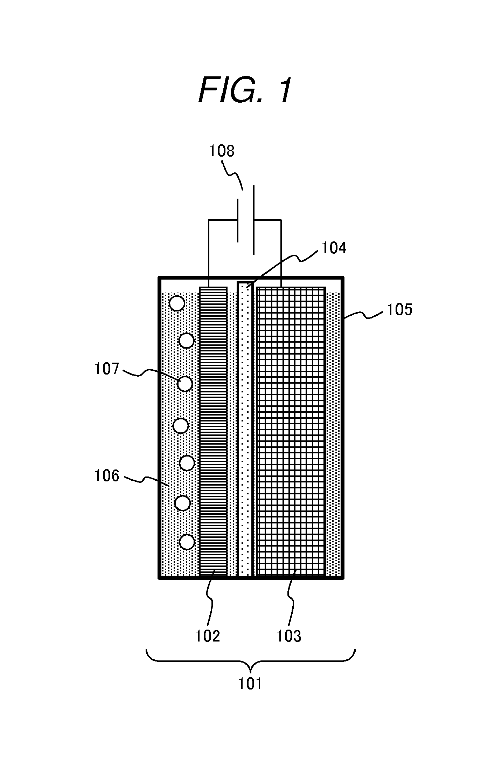

Fig. 1 is a schematic cross sectional view illustrating an example of a cell of a hydrogen production apparatus of the present invention.

A cell 101 includes a hydrogen electrode 102, a charge/discharge oxygen electrode 103, a partition wall 104, a tank 105, and an aqueous electrolyte solution 106. The hydrogen electrode 102 and the charge/discharge oxygen electrode 103 are connected to a power generation unit 108. The hydrogen electrode 102 and the charge/discharge oxygen electrode 103 are opposed to each other with the partition wall 104 interposed therebetween. They are inserted into the tank 105 in which the aqueous electrolyte solution 106 is filled. At the hydrogen electrode 102, hydrogen bubbles 107 are evolved upon electrolysis of water.

The charge/discharge capacitance of the charge/discharge oxygen electrode 103 is designed so as to be larger than that of the hydrogen electrode 102.

The charge/discharge capacitance can be measured by various methods and can be measured by a method such as a linear sweep voltammetry that determines the amount of charges based on the value of a current that flows when a predetermined potential range is swept.

When hydrogen electrode 102 was formed of an Ni mesh and a 10 wt% aqueous solution of potassium hydroxide was used as an aqueous electrolyte solution 106, the charge/discharge capacitance of the charge/discharge oxygen electrode 103 was 13 times that of the hydrogen electrode when using porous Ni, 56 times when using Ni mesh formed by plating an Ni nano-structure, and 126 times when using a Ti mesh formed by sintering Ir and Ru. By increasing the number of sheets of the Ti mesh formed by sintering Ir and Ru, capacitance as large as 1, 000 times or more could also be achieved.

Taking notice on the Ti mesh electrode formed by sintering Ir andRu, evolution of bubbles from the oxygen electrode was scarcely observed visually. Further, in a test of supplying a constant charging current by a constant current method, the voltage reached a predetermined level at the order of milliseconds upon starting current supply, there was no subsequent fluctuation of the voltage, and the effect of improving the response due to large capacitance double layer capacitor could be confirmed. Also in the subsequent current supply, voltage fluctuation was about 1%, the voltage increasing effect due to deposition of bubbles could not be recognized, and a predetermined voltage was maintained.

### (Comparative Example 1)

In Comparative Example 1, a Ni mesh was used for both the oxygen electrode and the hydrogen electrode. The charge/discharge capacitance of the oxygen electrode was 1.6 times as large as that of the hydrogen electrode. When a constant charging current was supplied by a constant current method, a predetermined voltage at the order of milliseconds was reached from the start up, but voltage fluctuated at the order of seconds until the voltage was settled at a constant level. Further, in the subsequent current supply, voltage fluctuation of about 10% was present and it couldbe confirmed that the electrode reaction was hindered by bubbles.

### [Example 2]

In Example 2, a hydrogen production system in which cells (hydrogen production apparatus) were connected in parallel was manufactured.

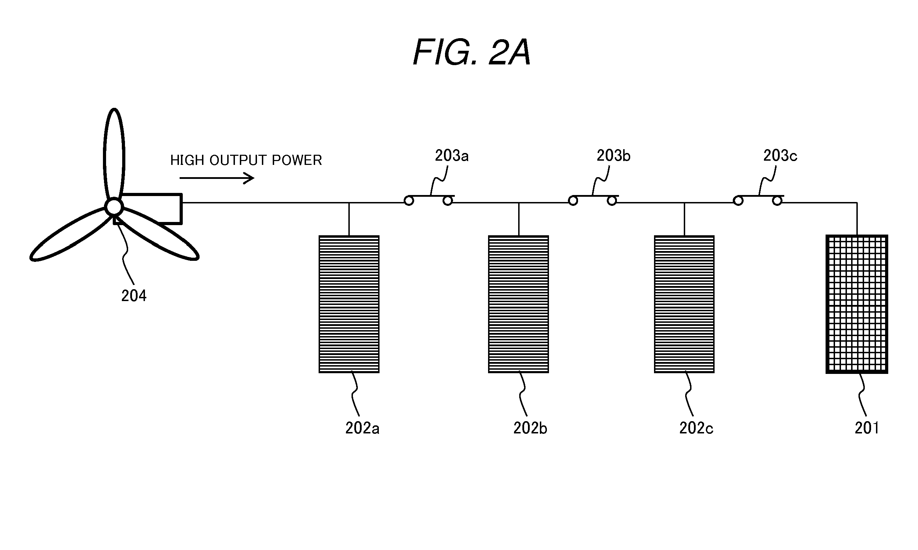

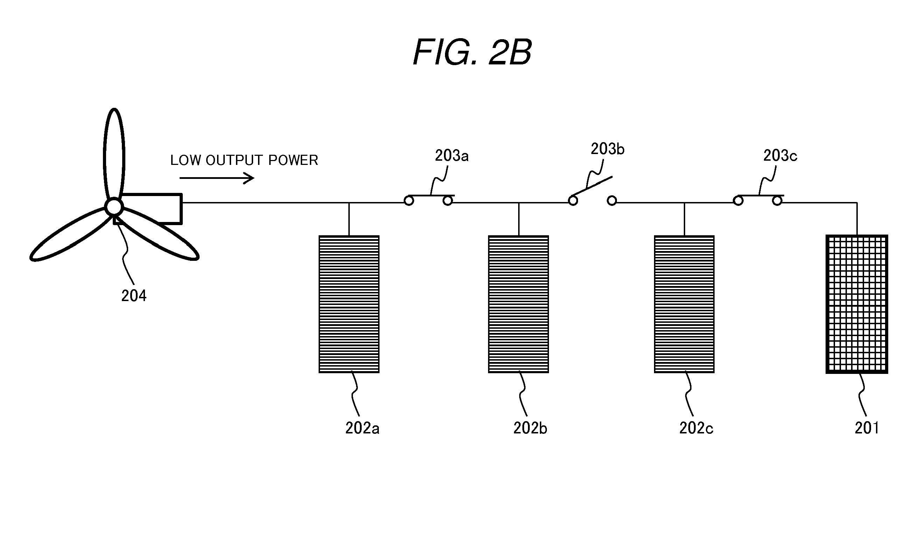

Figs. 2A and 2B are schematic configurational views of the hydrogen production systems.

In the drawings, a cell 201 (by the number of 1) having a charge/discharge oxygen electrode and cells 202a, 202b and 202c (by the number of three) each having a usual oxygen electrode are connected in parallel and adapted so that power can be supplied from the power generation unit 204. The cell 201 having the charge/discharge oxygen electrode is connected at the terminal end of the parallel circuit. Switches (203a, 203b, 203c) are disposed between each of the cells, for enabling ON/OFF control in the operation of the hydrogen production apparatus by switching the switches 203a, 203b or 203c in accordance with increase and decrease of the input power.

As shown in Fig. 2A, after all of the switches 203a, 203b and 203c were closed, a current was supplied to all of the four cells, and the cell 201 at the terminal end having the charge/discharge oxygen electrode was charged, the input power was decreased to one-half, the switch 203b was disconnected and only the cells 202a and 202b (by the number of two) each having the usual oxygen electrode were operated. In this case, it could be confirmed that the potential on the oxygen electrode of the cell 201 having the charge/discharge oxygen electrode and the cell 202c (not in operation) having a usual oxygen electrode was kept at a potential of a predetermined level or higher for a time 16 times as long as the case of using only the usual oxygen electrode by the power charged in the charge/discharge oxygen electrode.

### [Example 3]

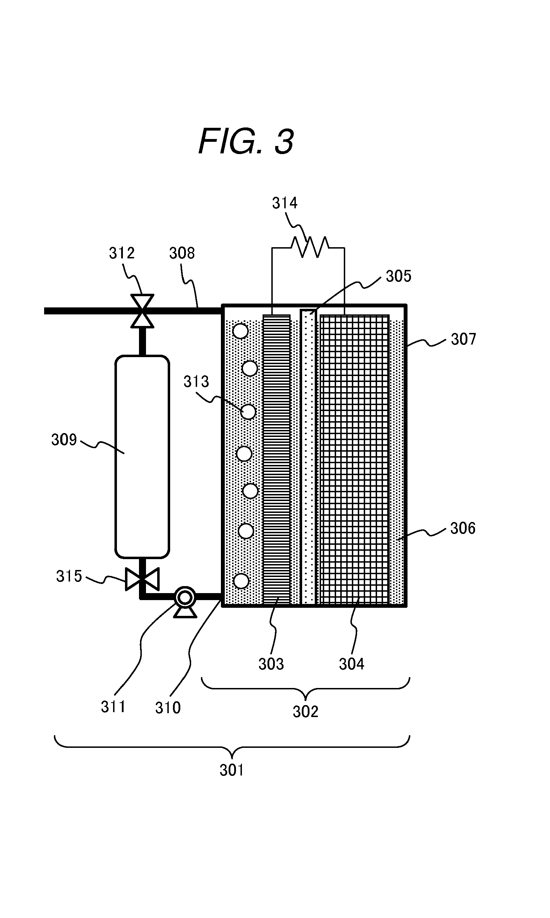

Fig. 3 is a schematic cross sectional view illustrating an example of a hydrogen production apparatus that can also generate power.

A hydrogen production apparatus 301 includes a cell 302, a pipe 308 for flowing generated hydrogen, a hydrogen storing unit 309 serving as both a gas liquid separation device and a tank, a regulator 312 for controlling the supply of hydrogen from the pipe 308 to the hydrogen storing unit 309 and the pressure of supply, a pipe 310 for releasing hydrogen stored in the hydrogen storing unit 309 to the tank 307, a valve 315 for controlling the release of hydrogen from the pipe 310 to the tank 307, and a pump 311. The cell 302 includes a hydrogen electrode 303, a charge/discharge oxygen electrode 304, a partition wall 305 and an aqueous electrolyte solution 306 sealed in the tank 307. At the hydrogen electrode 303, hydrogen bubbles 313 are evolved upon electrolysis of water.

Hydrogen supplied from the pipe 310 to the tank 307 is supplied to the aqueous electrolyte solution 306 on the side of the hydrogen electrode 303 partitioned by the partition wall 305 and is in contact with the hydrogen electrode 303.

Generated hydrogen can also be supplied directly to external equipment by providing a switching mechanism such as a three-way valve to the pipe 308.

After performing the electrolysis reaction of water and charging the charge/discharge oxygen electrode 304 for a predetermined time, the hydrogen electrode 303 and the charged oxygen electrode 304 were connected to a load 314. When hydrogen was released to the tank 307 by using the pump 311, it could be confirmed that a current was caused to flow to the load 314 and the hydrogen production apparatus 301 had a power generation function.

### List of Reference Signs

- 101: cell
- 102, 303: hydrogen electrode
- 103, 304: charge/discharge oxygen electrode
- 104, 305: partition wall
- 105, 307: tank
- 106, 306: aqueous electrolyte solution
- 107, 313: hydrogen bubbles
- 201: cell having a charge/discharge oxygen electrode
- 202: cell having a usual oxygen electrode
- 203: switch
- 301: hydrogen production apparatus
- 302: cell
- 308: pipe
- 309: hydrogen storing unit
- 310: pipe
- 311: pump
- 312: regulator

## Claims

1. A hydrogen production apparatus comprising:
an electrode pair including a hydrogen electrode and an oxygen electrode;
a partition wall interposed between the hydrogen electrode and the oxygen electrode; and
a tank containing the electrode pair, the partition wall, and an aqueous electrolyte solution,
the hydrogen production apparatus generating hydrogen by electrolysis of the aqueous electrolyte solution by the electrode pair,
wherein the charge/discharge capacitance of the oxygen electrode is 10 to 10,000 times as large as that of the hydrogen electrode.

2. A hydrogen production system comprising:
a configuration having a plurality of the hydrogen production apparatuses according to claim 1 connected in parallel; and
a power generation unit,
wherein charge/discharge capacitance of a part or all of the oxygen electrodes of the hydrogen production apparatuses is 10 to 10,000 times as large as that of the hydrogen electrode in the hydrogen production apparatus.

3. The hydrogen production apparatus according to claim 1,
wherein hydrogen is generated by electrolysis of water by the electrode pair,
the hydrogen production apparatus utilizing power which fluctuates at input.

4. The hydrogen production system according to claim 2,
wherein the charge/discharge capacitance of the part of the oxygen electrode is from 10 to 10,000 times as large as that of the hydrogen electrode, and
wherein the voltage on the oxygen electrode is kept at a predetermined level or higher when the input voltage from the power generation unit is lowered.

5. The hydrogen production apparatus according to claim 1, having a hydrogen storing unit for storing generated hydrogen.

6. The hydrogen production apparatus according to claim 5, having a pipe for releasing hydrogen stored in the hydrogen storing unit to the tank.

7. The hydrogen production apparatus according to claim 6,
being capable of generating power by a reduction reaction at the oxygen electrode in the charged state and an oxidation reaction of hydrogen in contact with the hydrogen electrode.

8. The hydrogen production apparatus according to claim 1,
wherein the oxygen electrode includes an oxide or a hydroxide of a metal, and the metal includes one or more elements selected from the group consisting of Ni, Ru, Ir, Ti, Sn, Mo, Ta, Nb, V, Fe and Mn.

9. A hydrogen production apparatus comprising:
an electrode pair including a hydrogen electrode and an oxygen electrode;
a partition wall interposed between the hydrogen electrode and the oxygen electrode; and a tank containing the electrode pair, the partition wall, and an aqueous electrolyte solution,
the hydrogen production apparatus generating hydrogen by electrolysis of the aqueous electrolyte solution by the electrode pair,
wherein the oxygen electrode includes an oxide or a hydroxide of a metal, and the specific surface area thereof is 2 to 10 times as large as that of the hydrogen electrode.

10. The hydrogen production apparatus according to claim 9,
wherein the metal includes one or more elements selected from the group consisting of Ni, Ru, Ir, Ti, Sn, Mo, Ta, Nb, V, Fe and Mn.
